Europäisches Patentamt

European Patent Office

Office européen des brevets

(11) Numéro de publication: **0 365 453**
**A1**

# (12) DEMANDE DE BREVET EUROPEEN

(21) Numéro de dépôt: **89460033.7**

(22) Date de dépôt: **10.10.89**

(51) Int. Cl.5: **A22C 17/02**

(30) Priorité: **18.10.88 FR 8814075**

(43) Date de publication de la demande:
**25.04.90 Bulletin 90/17**

(84) Etats contractants désignés:
**BE DE ES GB IT NL**

(71) Demandeur: **CENTRE NATIONAL DU MACHINISME AGRICOLE, DU GENIE RURAL, DES EAUX ET DES FORETS (CEMAGREF)**
**Parc de Tourvoie**
**F-92160 Antony(FR)**

Demandeur: **COUEDIC-MADORE**
**Z.A de Kerbusson Saint-Barnabe**
**F-22600 Loudeac(FR)**

(72) Inventeur: **Couedic, Bernard**
**24, rue Saint-Eloi**
**F-22600 Loudeac(FR)**
Inventeur: **Dupit, Jacques**
**6, avenue des Cités Unies**
**F-63200 Riom(FR)**
Inventeur: **Le Maux, Robert**
**3, impasse Descartes**
**F-22600 Loudeac(FR)**
Inventeur: **Mounin, Marc**
**Le Bois de l'Eau Espinasse-Vozelle**
**F-03110 Escurolles(FR)**

(74) Mandataire: **Martin, Jean-Jacques et al**
**Cabinet REGIMBEAU 11, rue Franz Heller**
**Centre d'Affaires Patton B.P. 19107**
**F-35019 Rennes Cédex(FR)**

(54) **Dispositif et procédé de maintien d'une pièce de viande au cours de son désossage.**

(57) Selon l'invention, la pièce de viande de boucherie telle qu'une demi-carcasse ou un quartier de gros bovin est désossée "en suspendu" ; le dispositif comprend :

a) des moyens de bridage (61-14) immobilisant la cuisse de l'animal ;

b) une pince (64) d'arrachage de la colonne vertébrale (CV) ;

c) un organe d'appui mobile (40) retenant la pièce de viande au moins dans sa région dorsale et permettant à l'opérateur de contrôler la déformation de la colonne vertébrale (CV) durant son arrachage.

## FIG_4

# DISPOSITIF ET PROCEDE DE MAINTIEN D'UNE PIECE DE VIANDE AU COURS DE SON DESOSSAGE

La présente invention concerne un procédé et un dispositif de maintien d'une pièce de viande au cours de son désossage.

Elle concerne plus précisément un procédé et un dispositif de maintien utilisable pour le désossage d'une grosse pièce de viande de boucherie brute comprenant toute ou partie de la colonne vertébrale de l'animal, selon la technique de désossage dite "en suspendu".

Par pièce de viande de boucherie brute, on entendra dans toute la description et les revendications ci-après une grosse pièce de viande destinée à être détaillée en vue de la consommation, dont la chair et les os n'ont pas encore été séparés ; il peut s'agir en particulier d'une demi-carcasse ou d'un quartier arrière ou avant de gros bovin, de veau, de porc, d'ovin etc.

Traditionnellement, le désossage est effectué sur table. Il concerne des quartiers ou des pièces de viande préalablement réfrigérés à 7°C à coeur. Récemment, il a été proposé d'effectuer ce désossage précocement avant réfrigération, soit entre 4 et 6 heures post mortem.

Il a déjà été proposé également une technique industrielle de désossage selon laquelle la pièce de viande passe successivement dans différents postes de travail où sont découpés et prélevés les uns après les autres les différents morceaux en vue de leur conditionnement et de leur vente ultérieure. Selon un procédé connu, la pièce de viande reste "suspendue" à un crochet durant toute l'opération ; elle est acheminée de poste en poste par un convoyeur aérien, ce qui présente des avantages intéressants, notamment sur le plan de l'hygiène et de la productivité.

A chacun des postes de travail, un opérateur professionnel effectue manuellement, au couteau, une certaine tâche c'est-à-dire un désossage partiel par enlèvement de certains morceaux suivant un mode opératoire bien défini. La pièce de viande se trouve suspendue devant l'opérateur, dans une position sensiblement verticale. La plupart des opérations de désossage qui doivent être faites dans un poste de travail, par un opérateur déterminé, sont en fait une suite d'opérations distinctes incluant un traçage, le dégagement et la levée du morceau concerné. Au cours de ce travail, il est souvent nécessaire d'immobiliser fermement la pièce de viande, au moins au niveau où la pièce est sujette à l'opération. Les moyens d'immobilisation doivent assurer une retenue efficace de la pièce de viande, sans l'endommager et naturellement sans abîmer les morceaux voisins qui seront prélevés ultérieurement. Ces moyens doivent pouvoir être actionnés facilement et rapidement par l'opérateur, de façon à ne pas ralentir la cadence de production ; ils doivent aussi pouvoir être escamotés facilement pour ne pas gêner les autres opérations, et pour autoriser le passage des différentes pièces de viande au poste de travail.

Ces problèmes se posent en particulier pour le désossage du faux-filet, du train de côtes et du collier d'un gros bovin, pour lequel la pièce brute est une demi-carcasse, un quartier arrière ou un quartier avant, désossage qui est effectué manuellement au couteau et est accompagné d'une traction sur la colonne vertébrale perpendiculairement à l'axe général de la pièce, et en oblique dans le plan vertical. De ce fait un dispositif de maintien ferme, mais ne contrariant par l'arrachage de la colonne vertébrale, est indispensable.

A la connaissance du déposant, il n'existe pas dans l'état de la technique de procédé ni de dispositif répondant aux impératifs qui viennent d'être cités, et l'objet principal de laprésente invention est de combler cette lacune.

Un autre objectif de l'invention est de proposer une technique d'assistance mécanique au désossage qui, combinée avec la technique de maintien selon l'invention, facilite très sensiblement l'opération de désossage dans l'application qui a plus particulièrement été évoquée plus haut.

A cet effet, le dispositif de maintien d'une pièce de viande de boucherie comprenant toute ou partie de la colonne vertébrale de l'animal, objet de la présente invention, qui comporte un support en forme de châssis allongé, sensiblement plan, s'étendant verticalement et adapté pour servir d'appui à la face externe de la pièce, est caractérisé en ce que ledit support comprend :

a) un organe de bridage apte à immobiliser la pièce de viande sensiblement au niveau de la cavité pelvienne, en maintenant ainsi la cuisse appliquée contre une plaque d'appui ;

b) une pince destinée à être accrochée à la colonne vertébrale de la pièce de viande, des moyens de traction tels qu'un câble ou un vérin (pneumatique, hydraulique ou électrique) étant prévus pour provoquer au moyen de cette pince le cintrage et l'arrachage progressifs de la colonne vertébrale au cours du désossage ;

c) un organe d'appui mobile apte à maintenir la pièce de viande au moins partiellement appliquée contre le support, et à se déplacer le long de la face interne de la pièce au moins dans la région dorsale de cette pièce, des moyens de commande de cet organe d'appui étant prévus qui permettent à un opérateur de contrôler la déformation de la colonne vertébrale durant son arrachage.

Par ailleurs, selon un certain nombre de caractéristiques avantageuses (mais non limitatives) :
- ledit organe d'appui mobile est mobile en translation, à la fois horizontalement, transversalement par rapport au plan du support, et verticalement, parallèlement à ce même plan ;
- ledit organe d'appui mobile a la forme générale d'un étrier en "U", apte à enserrer la pièce de viande et à s'appliquer par sa branche transversale contre la face interne de cette dernière ;
- les deux branches latérales de l'organe d'appui en "U" sont les tiges d'une paire de vérins pneumatiques à double effet agissant transversalement par rapport au plan de support ;
- l'organe d'appui et les vérins sont montés sur un chariot mobile parallèlement au plan du support, et déplacé par des vérins pneumatiques à double effet ;
- la branche transversale de l'organe d'appui mobile porte un rouleau antifriction ;
- l'organe de bridage est une barre d'appui sollicitée par un vérin pneumatique à double-effet ;
- ledit vérin pneumatique est monté basculant, ce qui permet d'ajuster la position verticale de l'organe de bridage à l'aide d'un autre vérin, et de l'adapter ainsi aux dimensions de la pièce de viande ;
- les moyens de traction agissant sur la pince ont une ligne d'action oblique dirigée vers le bas, du côté opposé au support, cette ligne d'action formant avec l'horizontale un angle aigu de l'ordre de 38°.

Le procédé de maintien, qui fait également l'objet de la présente invention, est caractérisé en ce que le désossage est assisté mécaniquement à l'aide d'une pince exerçant une traction sur la colonne vertébrale, tandis que la pièce de viande est bridée contre un support au niveau de la cuisse, et que la déformation de la colonne vertébrale est limitée et contrôlée par l'opérateur au fur et à mesure du désossage, par commande du déplacement d'un organe d'appui mobile, ce dernier s'appliquant contre la face interne de la pièce de viande, au-moins au niveau de la région dorsale et éventuellement en plus dans la région lombaire (demi-carcasse ou quartier arrière) et/ou la région cervicale (demi-carcasse ou quartier avant).

D'autres caractéristiques et avantages de l'invention apparaîtront de la description et des dessins annexés qui en présentent un mode de réalisation préférentiel.

Sur ces dessins :
- les figures 1 et 2 sont des vues générales schématiques du dispositif selon l'invention, respectivement vu de face et de côté ;
- la figure 1A est une vue de dessus partielle représentant une variante possible de l'organe d'appui mobile ;
- les figures 3 et 4 sont des vues simplifiées correspondant respectivement aux figures 1 et 2, sur lesquelles a été représentée une demi-carcasse de bovin destinée à être désossée au niveau de la colonne vertébrale, les côtes restant ou non attenantes aux vertèbres.

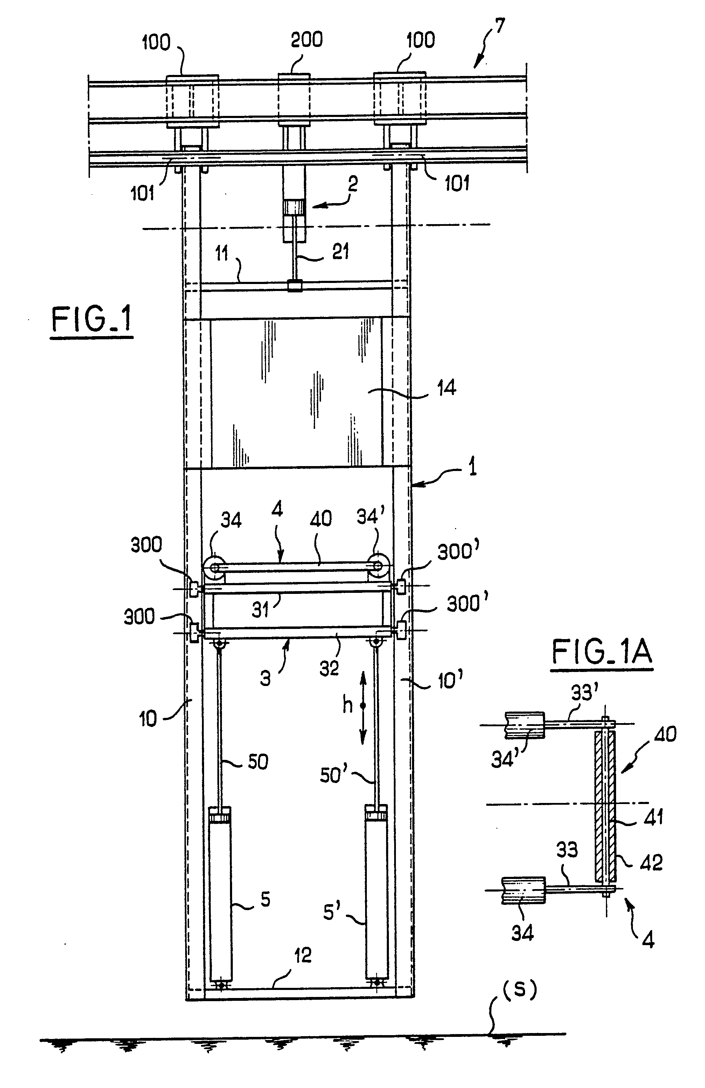

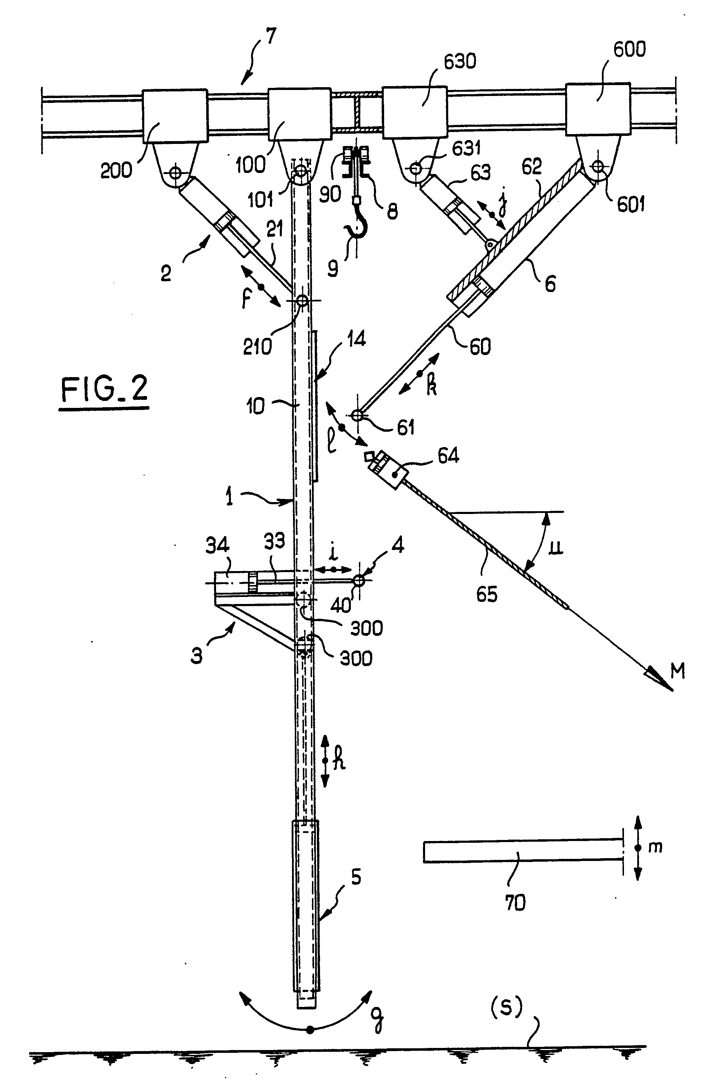

Le dispositif représenté aux figures 1 et 2 comprend un support métallique 1 ; celui-ci est un châssis en forme de cadre rectangulaire allongé, comprerant des longerons latéraux 10, 10' disposés parallèlement selon une direction verticale ; ces longerons sont reliés transversalement, de haut en bas, par une barre 11, une plaque 14, et une tige - ou traverse - 12. Les longerons latéraux 10, 10' sont des profilés de section en (U), et les côtés ouverts de ces deux longerons sont tournés vers l'intérieur du support 1, c'est-à-dire dirigés l'un vers l'autre. Ces longerons, ainsi que la barre 11, la plaque 14 et la tige 12 sont en métal, par exemple en acier inoxydable ; ces différents éléments sont assemblés les uns aux autres par des moyens appropriés, par exemple par soudage ou boulonnage.

La plaque 14 est de préférence légèrement incurvée (concavité tournée vers l'avant du support, c'est-à-dire vers la droite à la figure 2).

Le châssis support 1 est pratiquement plan, et on a désigné par la référence (P) la plan fictif contenant ce support.

Le support 1 est suspendu à une poutraison 7 par l'intermédiaire de goussets 100 sur lequel il est articulé au moyen d'axes 101 horizontaux, contenus dans le plan (P). Un vérin pneumatique à double effet 2 est également articulé sur un autre gousset 200 porté par la poutraison 7 ; l'extrémité libre de la tige 21 de ce vérin porte une bague formant palier d'articulation qui est emmanchée sur la barre 11. Comme on le comprend aisément à la simple observation de la figure 2, l'actionnement du vérin pneumatique 2 (double flèche (f)) permet de faire basculer l'ensemble du support 1 autour de l'axe 101 dans un sens ou dans l'autre (double flèche (g)).

La partie supérieure du support 1 est disposée à proximité d'une voie de roulement aérienne 8 sur laquelle circule, de manière bien connue, des crochets 9 pourvus de roulettes 90 servant au transport des pièces de viande. La voie de roulement est située du côté du support 1 opposé à celui où est situé le vérin 2 ; à la partie inférieure du support 1, est monté un chariot 3 mobile en hauteur ; ce chariot est formé par un assemblage de profilés métalliques et a la forme générale d'une console, qui est positionnée à l'intérieur du châssis 1 ; il est muni de quatre galets de roulement 300, qui circulent à l'intérieur des longerons en (U) 10, 10', ceux-ci jouant donc le rôle de rails de guidage du chariot.

Le chariot 3 comprend deux traverses horizontales 31, 32 situées sur la face avant du châssis 1 (côté droit de la figure 2).

Le mouvement de montée ou de descente (double flèche (h)) du chariot 3 est assuré par un jeu de deux vérins pneumatiques 5, 5' fixés à la tige transversale 12.

Le chariot 3 porte une paire de vérins pneumatiques à double effet 34, 34' disposés horizontalement, dont les tiges 33, 33' s'étendent perpendiculairement au plan (P), juste à l'intérieur des montants 10, 10'. Ces tiges constituent les deux branches latérales d'un organe d'appui mobile 4 qui - vu de dessus - affecte la forme générale d'un "U".

Avantageusement, comme cela est prévu dans la variante représentée à la figure 1A, la branche transversale 40 de ce "U" comprend un rouleau 42 qui est libre en rotation sur un axe 41.

L'actionnement synchronisé des vérins 34, 34' permet d'écarter ou, au contraire, de rapprocher la branche 40 du support 1 (double flèche (i), figure 2).

Le dispositif est accessoirement équipé d'une pince de préhension 64 disposée à l'extrémité d'un câble de traction 65. Des moyens d'actionnement et de guidage non représentés, extérieurs au support 1, permettent d'exercer sur le câble une force de traction (M) suivant une direction bien déterminée faisant un angle (u) avec l'horizontale ; cette force est dirigée vers le bas, et l'angle (u) est compris entre 35 et 45°, de préférence voisin de 38° ; elle est également dirigée vers l'extérieur par rapport au support 1 (c'est-à-dire du côté opposé à ce support).

Le câble 65 pourrait être remplacé par un vérin.

La pince 64 est une pince de type connu, par exemple à commande pneumatique, dont les mors sont conformés pour saisir la colonne vertébrale de la pièce de viande.

En vis-à-vis de la face avant du support 1, à la partie supérieure de celui-ci, est prévu un dispositif de bridage de la pièce de viande, qui est suspendu à la poutraison 7.

Ce dispositif comprend un premier vérin pneumatique à double effet 6, qui est solidaire d'une plaque pivotante 62 articulée autour d'un axe horizontal 601. L'axe 601 est porté par un gousset 600 fixé à la poutraison 7.

La tige 60 de ce vérin 6 porte, à son extrémité libre, un organe de bridage constitué d'une barre transversale horizontale 61 située sensiblement au niveau de la plaque d'appui 14 du support 1.

Un second vérin 63, articulé à un gousset 630 autour d'un axe 631, a une tige dont l'extrémité libre est fixée à la plaque 62.

Comme on le comprend aisément à la simple observation de la figure 2, l'actionnement du second vérin 63 (double flèche (j)) permet de faire basculer le premier vérin 6 autour de l'axe 601, dans un sens ou dans l'autre, ce qui permet d'ajuster le niveau de la barre de bridage 61, c'est-à-dire la position en hauteur de cette barre par rapport au support 1 (double flèche (1)).

L'actionnement du vérin 6 permet d'écarter ou de rapprocher la barre 61 du support 1 (et de la plaque 14).

Enfin, le dispositif est équipé d'une plate-forme élévatrice 70 mobile en hauteur (double flèche (m)) grâce à des moyens de commande appropriés (non représentés). Cette plate-forme est destinée à supporter l'opérateur, permettant de le surélever par rapport au sol (S) en vue de certaines opérations de désossage.

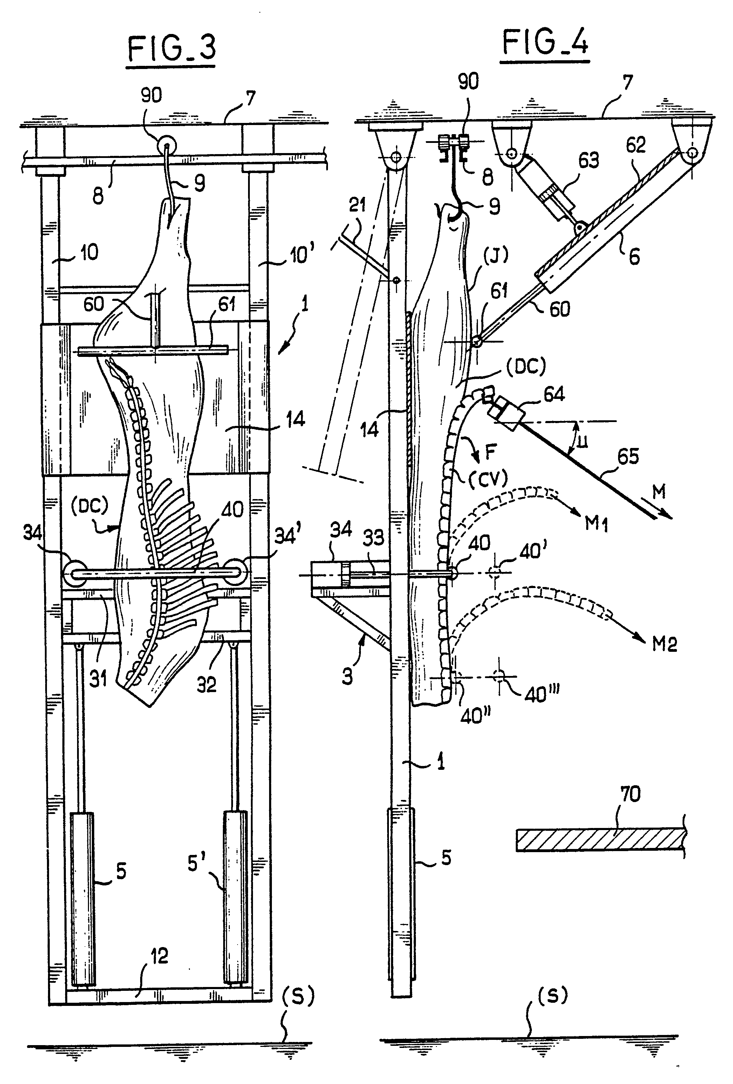

Nous allons maintenant expliquer, en nous référant plus particulièrement aux figures 3 et 4, de quelle manière le dispositif qui vient d'être décrit est utilisé pour le désossage d'une demi-carcasse de bovin, et notamment pour le désossage du faux-filet, du train de côtes, et du collier.

On notera tout d'abord que l'opérateur attaché au poste de désossage dispose à portée de mains d'un pupitre de commande (non représenté), qui lui permet, en actionnant des pédales et/ou des manettes appropriées, de piloter les différents vérins 2, 5-5', 34-34', 6 et 63, les mouvements de préhension (ouverture/fermeture) et de traction de la pince 64, et les déplacements de la plate-forme 70.

La demi-carcasse (DC) est amenée et positionnée au poste de travail, suspendue au crochet roulant 9. Ceci se fait automatiquement si le réseau aérien est un réseau convoyé, manuellement dans le cas contraire.

Lors de la mise en place de la pièce de viande au poste de travail, le vérin 2 se trouve rétracté, de sorte que le support 1 est en position escamotée - partiellement représenté en traits mixtes à la figure 5 - et n'interfère pas avec la trajectoire de la demi-carcasse.

De même, la barre de bridage 61 est éloignée du support 1. Les vérins 5 et 5' sont rétractés, de sorte que le chariot 3 est en position basse ; les vérins 34, 34' - au contraire - sont en extension, branche 40 écartée du support 1.

La demi-carcasse ayant été arrêtée en vis-à-vis du support 1, face externe tournée vers ce support, ce dernier est ramené dans sa position verticale normale (par extension du vérin 2). La carcasse vient alors prendre appui, par sa face externe contre la plaque incurvée 14 au niveau de la cuisse. La région de la demi-carcasse située au niveau du thorax se trouve en correspondance des traverses 31, 32, de sorte que tout mouvement de recul de cette demi-carcasse perpendiculairement au réseau aérien est interdit.

Les vérins 6 et 63 sont actionnés par l'opérateur de telle manière que la barre de bridage 61 vienne immobiliser la cuisse au niveau de la cavité pelvienne, en l'appliquant fermement contre la plaque 14.

Grâce à la présence des deux vérins 6, 63, la barre 61 peut être positionnée avec précision et adaptée aux différents gabarits de carcasses.

Ensuite, le chariot 3 est remonté au moyen des vérins 5-5', l'organe d'appui en "U" 4 - qui se trouve en position avancée -entourant la demi-carcasse. Lorsque l'organe 4 est arrivé dans la région lombaire, les vérins 34-34' sont rétractés, si bien que la branche 40 (ou avantageusement le rouleau 42) vient s'appliquer contre la colonne vertébrale.

Le désossage est effectué par l'opérateur manuellement au couteau, et est assisté d'une traction mécanique au moyen de la pince 64.

L'opérateur commence donc par dégager l'extrémité lombaire de la colonne vertébrale (CV) et accroche la pince 64 à celle-ci.

Il actionne alors le câble 65 de manière à exercer sur la colonne (CV) une traction oblique M.

Il effectue ensuite le désossage proprement dit, lequel comprend la levée successive des vertèbres au niveau du faux-filet, du train de côtes, et du collier. Durant cette opération, qui est grandement facilitée par la traction mécanique sur la colonne vertébrale, l'organe d'appui 40 retient la carcasse en exerçant sur celle-ci une force opposée à la force de traction.

Sa mobilité dans un plan horizontal permet à l'opérateur de contrôler le cintrage de la colonne vertébrale (flèche (F), figure 4) en l'adaptant à sa technique de désossage et en évitant les mouvements brutaux d'arrachage.

Sa mobilité en direction verticale lui permet de se déplacer le long de la colonne vertébrale, de haut en bas, au fur et à mesure du désossage, et ceci de manière progressive depuis les vertèbres lombaires jusqu'à l'atlas.

Si l'organe d'appui 40 est muni d'un rouleau suiveur rotatif 42, les frottements sont sensiblement diminués, et sa progression se fait avec douceur.

A la figure 4 on a illustré en traits forts le début de l'arrachage de la colonne vertébrale (flèche (M)), et en traits interrompus les phases intermédiaire (flèche (M_1)) et finale (flèche (M_2)) de cet arrachage.

La faculté de déplacement de l'organe d'appui 40 a été illustrée par les représentations 40', 40" et 40''' faites en traits interrompus.

Il est avantageusement prévu à proximité immédiate de la zone de travail de l'opérateur deux tapis roulants destinés à recevoir et évacuer d'une part les os, d'autre part les morceaux de viande.

Lorsque l'opération de désossage est terminée, l'opérateur actionne les différents vérins pour escamoter l'organe d'appui 40, l'organe de bridage 61, et écarter vers l'arrière le support 1, de sorte que la demi-carcasse peut être acheminée au poste suivant et une nouvelle carcasse est amenée au poste de travail.

Le procédé et le dispositif qui viennent d'être décrits peuvent également s'appliquer à un quartier arrière ou avant au lieu d'une demi-carcasse ; dans ce cas le support utilisé peut naturellement avoir une longueur plus faible.

Si l'on a affaire à un quartier arrière, l'organe d'appui mobile parcourt les régions lombaire et dorsale de l'animal ; si l'on a affaire à un quartier avant, il coopère avec les régions dorsale et cervicale.

## Revendications

1. Dispositif de maintien d'une pièce de viande de boucherie comprenant toute ou partie de la colonne vertébrale de l'animal, notamment une demi-carcasse ou un quartier de gros bovin, en vue de son désossage "en suspendu", qui comporte un support en forme de châssis allongé, sensiblement plan, s'étendant verticalement et adapté pour servir d'appui à la face externe de la pièce, caractérisé en ce que ledit support (1) comprend :

a) un organe de bridage (61) apte à immobiliser la pièce de viande (DC) sensiblement au niveau de la cavité pelvienne, maintenant ainsi la cuisse appliquée contre une plaque d'appui (14) ;

b) une pince (64) destinée à être accrochée à la colonne vertébrale (CV) de la pièce de viande (DC), des moyens de traction tels qu'un câble (65) ou un vérin étant prévus pour provoquer au moyen de cette pince (64) le cintrage et l'arrachage progressifs de la colonne vertébrale (CV) au cours du désossage ;

c) un organe d'appui mobile (4) apte à maintenir la pièce de viande (DC) au moins partiellement appliquée contre le support (1), et à se déplacer le long de la face interne de la pièce (DC), au moins dans la région dorsale de cette dernière, des moyens de commande de cet organe d'appui étant prévus qui permettent à un opérateur de contrôler la déformation de la colonne vertébrale (CV) durant son arrachage.

2. Dispositif selon la revendication 1, caractérisé en ce que ledit organe d'appui mobile (4) est mobile en translation, à la fois horizontalement, transversalement par rapport au plan (P) du support, et verticalement, parallèlement au plan (P).

3. Dispositif selon la revendication 2, caractérisé en ce que ledit organe d'appui mobile (4) a la forme générale d'un étrier en "U", apte à enserrer la pièce de viande (DC) et à s'appliquer par sa branche transversale (40) contre la face interne de cette dernière.

4. Dispositif selon la revendication 3, caractérisé en ce que les deux branches latérales (33, 33′) de l'organe d'appui en "U" (4) sont les tiges d'une paire de verins pneumatiques à double effet (34, 34′) agissant transversalement par rapport au plan (P) de support (1).

5. Dispositif selon la revendication 4, caractérisé en ce que l'organe d'appui (4) et les vérins (34, 34′) sont montés sur un chariot (3) mobile parallèlement au plan (P), et déplacé par des vérins pneumatiques à double effet (5, 5′).

6. Dispositif selon l'une des revendications 3 à 5, caractérisé en ce que la branche transversale (40) de l'organe d'appui mobile (4) porte un rouleau antifriction (42).

7. Dispositif selon l'une des revendications 1 à 6, caractérisé en ce que l'organe de bridage (61) est une barre d'appui sollicitée par un vérin pneumatique à double-effet (6).

8. Dispositif selon la revendication 7, caractérisé en ce que ledit vérin pneumatique (6) est monté basculant, ce qui permet d'ajuster la position verticale de l'organe de bridage (61) à l'aide d'un autre vérin (63), et de l'adapter ainsi aux dimensions de la pièce de viande (DC).

9. Dispositif selon l'une des revendications 1 à 8, caractérisé en ce que les moyens de traction (65) agissant sur la pince (64) ont une ligne d'action oblique dirigée vers le bas, du côté opposé au support (1), cette ligne d'action formant avec l'horizontale un angle aigu (u) de l'ordre de 38°.

10. Procédé de maintien d'une pièce de viande de boucherie comprenant toute ou partie de la colonne vertébrale de l'animal, notamment une demi-carcasse ou un quartier de gros bovin, en vue de son désossage "en suspendu", ce désossage, qui est effectué manuellement au couteau par un opérateur, incluant l'arrachage de la colonne vertébrale, caractérisé en ce que le désossage est assisté mécaniquement à l'aide d'une pince exerçant une traction sur la colonne vertébrale, tandis que la pièce de viande est bridée contre un support au niveau de la cuisse, et que la déformation de la colonne vertébrale est limitée et contrôlée par l'opérateur au fur et à mesure du désossage, par commande du déplacement d'un organe d'appui mobile, ce dernier s'appliquant contre la face interne de la pièce de viande, au niveau, au moins de la région dorsale, et éventuellement des régions lombaires et cervicales.

FIG.1

FIG.1A

(s)

FIG.2

EP 0 365 453 A1

FIG_3

FIG_4

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | EP-A-300940 (S.O.C.O.F.) <br> * colonne 5, ligne 28 - colonne 5, ligne 45 * | 1, 10 | A22C17/02 |
| A | * colonne 6, ligne 21 - colonne 8, ligne 41 * <br> --- | 3, 4, 9 | |
| A | FR-A-2598887 (S.O.C.O.F.) <br> * page 7, ligne 21 - page 8, ligne 11 * <br> * page 9, ligne 33 - page 11, ligne 16 * <br> --- | 1, 7-10 | |
| A | FR-A-2261708 (MITAB) <br> * page 5, ligne 19 - page 5, ligne 34 * <br> --- | 1, 7, 8 | |
| A | FR-A-2611116 (GRAJOSZEX) <br> * le document en entier * <br> --- | 2 | |
| A | EP-A-121477 (CHIRON) <br> --- | | |
| A | US-A-4651384 (KORHONEN) <br> ----- | | |

### DOMAINES TECHNIQUES RECHERCHES (Int. Cl.5)

A22C
A22B

Le présent rapport a été établi pour toutes les revendications

| Lieu de la recherche | Date d'achèvement de la recherche | Examinateur |
|---|---|---|
| LA HAYE | 17 JANVIER 1990 | DE LAMEILLIEURE D. |

EPO FORM 1503 03.82 (P0402)